# EUROPÄISCHE PATENTSCHRIFT

(11) **EP 2 963 264 B1**
(45) Veröffentlichungstag und Bekanntmachung des Hinweises auf die Patenterteilung: **12.09.2018**
(21) Anmeldenummer: 15174994.2
(22) Anmeldetag: 02.07.2015
(51) Int. Cl.: F02B 37/18, F02M 26/54, F02M 26/65, F02M 26/66, F16K 27/02, F16K 31/04

(54) **MODULAR AUFGEBAUTES REGELVENTIL**
MODULAR CONTROL VALVE
SOUPAPE DE REGULATION MODULAIRE

(30) Priorität: 02.07.2014 DE 102014109247
(43) Veröffentlichungstag der Anmeldung: 06.01.2016
(73) Patentinhaber: Pierburg GmbH, 41460 Neuss (DE)
(72) Erfinder: SIMONS, Norbert, 40233 Düsseldorf (DE)
(74) Vertreter: Patentanwälte ter Smitten Eberlein-Van Hoof Rütten Partnerschaftsgesellschaft mbB

(56) Entgegenhaltungen:
- EP-A2- 1 298 299
- WO-A1-2006/081653
- CN-A- 103 133 190
- DE-A1-102014 102 524
- JP-A- H11 270 415
- KR-A- 20010 006 301

## Beschreibung

Die Erfindung betrifft ein Regelventil zum Anbau an ein Strömungskanalgehäuse eines Kraftfahrzeug-Verbrennungsmotors mit einem Strömungskanalgehäuseteil, das zumindest eine Strömungseinlassöffnung, eine Strömungsauslassöffnung und einen zwischen der Strömungseinlassöffnung und der Strömungsauslassöffnung angeordneten Strömungskanalabschnitt aufweist, einem Regelkörper, der in dem Strömungskanalgehäuseteil angeordnet ist und mit dem ein Durchlass zwischen der Strömungseinlassöffnung und der Strömungsauslassöffnung regelbar ist, insbesondere freigebbar und verschließbar, einem Betätigungsglied mit einer Längsachse, wobei an dem Betätigungsglied der Regelkörper befestigt ist und das Betätigungsglied sich in Längserstreckung durch eine Öffnung des Strömungskanalgehäuseteils erstreckt, einem Aktor, über den das Betätigungsglied in Bewegung versetzbar ist, und einem Aktorgehäuseteil.

Derartige Regelventile werden beispielsweise als Abgasrückführventile, Abgasklappen oder Waste-Gateventile verwendet. Solche Regelventile umfassen in der Regel einen Grundkörper bzw. ein Gehäuse mit einem strömungsseitigen ersten Teil, insbesondere ein Strömungskanalgehäuseteil, und einem antriebsseitigen zweiten Teil, insbesondere ein Aktorgehäuseteil, wobei die Gehäuseteile einstückig als ein Druckgussgehäuse ausgebildet sind.

Das Strömungskanalgehäuseteil weist je nach Größe und Form des fahrzeugseitigen Strömungskanalgehäuses, an das das Regelventil angebaut ist, eine korrespondierende Ausgestaltung auf und ist üblicherweise in das fahrzeugseitige Strömungskanalgehäuse eingefügt oder integriert. Unter dem fahrzeugseitigen Strömungskanalgehäuse ist insbesondere ein zu dem oder von dem Verbrennungsmotor führender Strömungskanal zu verstehen, beispielsweise ein Abgaskanal oder Zuluftkanal. Das Strömungskanalgehäuseteil des Regelventils kann ein oder mehrere Strömungseinlässe und Strömungsauslässe sowie ein oder mehrere zwischen diesen angeordnete Ventilsitze aufweisen. Der von dem Ventilsitz umgebene Durchlass wird von dem Regelkörper beherrscht, der mit dem Betätigungsglied, beispielsweise einer Ventilstange, verbunden ist. Das Betätigungsglied wird über ein Getriebe von einem Elektromotor betätigt, wobei das Getriebe mit dem Elektromotor den Aktor des Regelventils bildet.

Das Aktorgehäuseteil ist in der Regel ein von dem Strömungskanalgehäuseteil nach außen hin hervorstehender Trägerkörper, der das Getriebe zumindest zweiseitig umgibt und an dem verschiedene Komponenten, wie eine Befestigungseinrichtung, eine Stellmimik und/oder eine Antriebseinrichtung angeordnet sind. Zumindest die Antriebseinrichtung ragt üblicherweise von dem Aktorgehäuseteil in eine Richtung senkrecht zu der Längsachse des Betätigungsglieds hervor und weist zumeist ein separates Gehäuse auf. Durch das Auskragen des Aktorgehäuseteils sowie der Antriebseinrichtung außerhalb der Strömungsleitung wird ein entsprechend großer Montage- bzw. Anbauraum in einem Fahrzeug bzw. Verbrennungsmotor benötigt.

Aus der WO 2006/081653 A1 ist ein Regelventil bekannt, das einen Ventil-Antriebsteil und einen separaten Strömungskanalteil umfasst, wobei der Antriebsteil durch einen axialen Zuganker gebildet ist, der bei Erzeugen eines Magnetfeldes mittels einer Magnetspule eine lineare Bewegung vollziehen kann.

Aus der EP 1 298 299 A2 ist eine Drosselvorrichtung mit einem modularen Aufbau bekannt, wobei ein separates Heizungsmodul vorgesehen ist, das in mehreren unterschiedlichen Positionen an der Drosselvorrichtung angeordnet werden kann.

Zusätzlich ist aus der CN 103 133 190 A ein Regelventil bekannt, welches ein vom Strömungsgehäuse getrenntes Aktorgehäuse aufweist, welches in zwei im 180°- Winkel zueinander verdrehten Stellungen am Strömungsgehäuse befestigt werden kann.

Aus der DE 10 2012 104 612 A1 ist ein Regelventil bekannt, das als ein sogenanntes Steckventil ausgeführt ist und ein Einsteckgehäuseteil mit einem axialen Einlass sowie einem radialen Auslass aufweist. Das Einsteckgehäuse ist einstückig mit einem Aktorgehäuseteil ausgebildet, wobei zwischen dem Aktorgehäuseteil und dem Einsteckgehäuseteil eine Flanschplatte ausgebildet ist. An der Flanschplatte ist ein Schraubenlochmuster ausgebildet, so dass das Regelventil durch Schrauben an einem fahrzeugseitigen Strömungskanal befestigt werden kann.

Nachteilig an dieser Ausführung ist, dass für jeden neuen Kunden, der eine andere Geometrie des fahrzeugseitigen Strömungskanalgehäuses, insbesondere einen anderen Kanaldurchmesser, Kanalquerschnitt oder eine andere Lage der Kanalöffnungen, aufweist und/oder einen anderen fahrzeugseitigen Montageraum für das hervorstehende Aktorgehäuse und die daran angeordneten Komponenten bereitstellt, das gesamte Gehäuse neu angepasst werden muss, so dass für jeden Kunden unabhängig von der Stückzahl immer eine neue Form zur Herstellung des Ventilgehäuses notwendig ist.

Es stellt sich daher die Aufgabe, ein Regelventil zum Anbau an ein Strömungskanalgehäuse eines Kraftfahrzeug-Verbrennungsmotors bereitzustellen, das mit möglichst geringem Fertigungs- und Montageaufwand an unterschiedliche Strömungskanalgehäuse und/oder Montageräume angepasst werden kann.

Diese Aufgabe wird durch ein Regelventil mit den Merkmalen des Hauptanspruchs gelöst.

Dadurch, dass das Strömungskanalgehäuseteil und das Aktorgehäuseteil jeweils separat ausgebildet sind und das Aktorgehäuseteil relativ zu dem Strömungskanalgehäuseteil in zumindest zwei um die Längsachse verdrehten Positionen auf das Strömungskanalgehäusetell aufsetzbar ist, wobei zumindest ein Vorsprung vorgesehen ist, der sich in eine an dem Strömungskanalgehäuseteil und/oder an dem Aktorgehäuseteil ausgebildete, korrespondierende Ausnehmung erstreckt, und wobei das Strömungskanalgehäuseteil als ein Einsteckgehäuse ausgebildet ist, das in eine Aufnahme des Strömungskanalgehäuses einsteckbar ist, können das Aktorgehäuseteil und das Strömungskanalgehäuseteil in relativ einfacher Weise an die Kundenanforderungen, beispielsweise an die Ausgestaltung des fahrzeugseitigen Strömungskanalgehäuses sowie den zur Verfügung stehenden Montageraum, angepasst werden.

Durch die Entkopplung des Strömungskanalgehäuseteils von dem Aktorgehäuseteil können beide Gehäuseteile des Regelventils unabhängig voneinander gefertigt, verarbeitet und erst bei der Endmontage zusammengefügt werden. Dadurch kann insbesondere das Strömungskanalgehäusetell, das in der Regel die Schnittstelle zwischen Regelventil und fahrzeugseitigem Strömungskanalgehäuse bildet, relativ schnell und unkompliziert an die unterschiedlichen fahrzeugseitigen Gegebenheiten angepasst bzw. ausgewählt werden, beispielsweise zur Anpassung des Durchmessers, der Größe oder der Höhen-, Breiten- und Tiefenlage der Einlass- bzw. Auslassöffnung des Strömungskanalgehäuseteils. Die Komponenten zum Betrieb des Regelventils, wie der Regelköper, das Betätigungsglied oder das Getriebe, können für verschiedene Ausführungen des Regelventils ohne Änderungen übernommen bzw. verwendet werden. Wird beispielsweise ein anderer Ventil-Kanaldurchmesser benötigt, wird vorteilhafterweise lediglich das Strömungskanalgehäuseteil an den Ventil-Kanaldurchmesser angepasst bzw. ein passendes Strömungskanalgehäuseteil ausgewählt, wobei das Aktorgehäuseteil unverändert übernommen werden kann. In einem anderen Fall, bei dem beispielsweise lediglich eine andere Kraftübersetzung in dem Getriebe erwünscht ist, kann auch nur das Aktorgehäuseteil mit samt den Aktor-Komponenten, wie das Getriebe, angepasst bzw. ausgetauscht werden. Durch die Kombination unterschiedlich großer Strömungskanalgehäuseteile und/oder Aktorgehäuseteile kann eine Vielzahl von Varianten des Regelventils bereitgestellt werden und der Fertigungs- und Montageaufwand erheblich reduziert werden. Zudem kann schnell und kostengünstig auf Kundenwünsche reagiert werden, da die Bauteile jeweils als ein Modul gefertigt und bereitgestellt werden können.

Durch die Verdrehbarkeit des Aktorgehäuseteils gegenüber dem Strömungskanalgehäuseteil kann das Regelventil letztlich noch während der Montage vor Ort entsprechend des zur Verfügung stehenden fahrzeugseitigen Montageraums angepasst werden. Dazu ist das Aktorgehäuseteil in verschiedenen Positionen auf das Strömungskanalgehäuseteil aufsetzbar bzw. kann relativ zu dem Strömungskanalgehäuseteil verdrehbar gelagert sein. So kann bei einer Montage des Regelventils das Aktorgehäuseteil mit samt den an dem Aktorgehäuseteil angeordneten Komponenten, wie dem Antriebsmotor, um eine Drehachse relativ zu dem Strömungskanalgehäuse verdreht werden. Insbesondere kann das Aktorgehäuseteil relativ zu der Einlass- und/oder Auslassöffnung des Strömungskanalgehäuseteils in einem bestimmten Winkel um die Längsachse des Betätigungsglieds verdreht positioniert werden, beispielsweise in einem Winkel von 90°, 180° oder 270°. Selbstverständlich kann auch jeder andere Winkel einstellbar sein. Dadurch kann der zur Verfügung stehende Montageraum für den am Aktorgehäuseteil auskragenden Teil optimal ausgenutzt werden. Die Drehachse ist bevorzugt auch eine Mittelachse einer axialen Erstreckung des Strömungskanalgehäuseteils. Nach der Verdrehung bzw. dem verdrehten Aufsetzen des Aktorgehäuseteils auf das Strömungskanalgehäuseteil können beide Gehäuseteile fest miteinander verbunden werden, beispielsweise durch Schrauben, Nieten, Schweißen oder andere Verfahren. Dadurch sind Ventilausführungen und deren Montage für verschiedene Anforderungen in relativ einfacher Weise realisierbar.

Der Vorsprung kann eine Schraube, ein Stift, Bolzen, Zapfen, Steg oder Absatz sein, die bzw. der an dem Strömungskanalgehäuseteil und/oder an dem Aktorgehäuseteil hervorsteht. Der zumindest eine Vorsprung kann zwischen dem Strömungskanalgehäuseteil und dem Aktorgehäuseteil derart angeordnet sein, dass das Aktorgehäuseteil gegenüber dem Strömungskanalgehäuseteil um die Längsachse verdrehbar gelagert ist. Ein Verschieben des Strömungskanalgehäuseteils gegenüber dem Aktorgehäuseteil in zumindest einer Ebene wird so zuverlässig vermieden. Ferner kann der Vorsprung dazu dienen, das Strömungskanalgehäuseteil an dem Aktorgehäuseteil festzulegen. Dadurch kann eine relative Ausrichtung und/oder Befestigung des Strömungskanalgehäuseteils an dem Aktorgehäuseteil in relativ einfacher Weise erfolgen. Die Aufnahme ist beispielsweise eine an dem fahrzeugseitigen Strömungskanalgehäuse ausgebildete zylindrische Aussparung, in die das ebenfalls zylindrische Strömungskanalgehäuseteil eingesteckt werden kann. Die Einlass- und Auslassöffnung des Strömungskanalgehäuseteils korrespondiert dabei mit Einlass- und Auslassöffnungen der Aufnahme bzw. des fahrzeugseitigen Strömungskanalgehäuses. Ein solches Steckventil ist besonders einfach zu fertigen und zu montieren, da das gesamte Ventil am Ventilsitz vor dem Einsetzen in das Strömungskanalgehäuse vormontiert werden kann.

Vorzugsweise ist ein Überwurfflansch vorgesehen, der das Aktorgehäuseteil zumindest teilweise radial umgibt, und der relativ zu dem Aktorgehäuseteil in zumindest zwei um die Längsachse verdrehten Positionen auf das Aktorgehäuseteil aufsetzbar ist, und der ein Schraubenlochmuster zum Befestigen des Überwurfflansches an dem Strömungskanalgehäuse, insbesondere an einem korrespondierenden Gegenflansch, aufweist. Der Überwurfflansch lässt sich vorteilhafterweise von der Seite des Aktorgehäuseteils aus auf einen Absatz oder eine Grundplatte des Aktorgehäuseteils schieben. Sodann kann das Regelventil über Schrauben, die durch die Durchgangslöcher des Schraubenlochmusters des Überwurfflansches gesteckt sind, an dem fahrzeugseitigen Strömungskanalgehäuse befestigt werden. Der Überwurfflansch kann unabhängig von dem Aktorgehäuseteil und Strömungskanalgehäusetell hergestellt sein. Die Anlagefläche des Überwurfflansches an dem Aktorgehäuseteil kann unabhängig von der Ausgestaltung des Aktorgehäuseteils oder des Überwurfflansches normiert sein. Dadurch können verschieden ausgebildete Überwurfflansche, beispielsweise mit jeweils unterschiedlichen Durchgangslöchern des Schraubenlochmusters, jeweils an unterschiedlich ausgebildeten Aktorgehäuseteilen anliegen. Dadurch können Herstell- sowie Montagekosten eingespart werden.

Der Überwurfflansch liegt bevorzugt sowohl mit einer axialen Anlagefläche als auch mit einer radialen Anlagefläche an dem Aktorgehäuseteil an. Dadurch kann ein Verschieben des Aktorgehäusetells gegenüber dem Überwurfflansch vermieden werden. Besonders bevorzugt liegt der Überwurfflansch mit einer radialen Anlagefläche zumindest teilweise sowohl an dem Aktorgehäusetell, beispielsweise an einer Aktorgehäuseteil-Grundplatte, als auch an dem Strömungskanalgehäuseteil an. Die Aktorgehäuseteil-Grundplatte kann zudem mit einer axialen Anlagefläche an dem Strömungskanalgehäuseteil anliegen, so dass eine vollständige relative Fixierung zwischen dem Überwurfflansch, der Aktorgehäuseteil-Grundplatte und dem Strömungskanalgehäuseteil erreicht wird.

Der zumindest eine Vorsprung ist bevorzugt achssymmetrisch und/oder konzentrisch zu der Längsachse angeordnet, oder die zumindest zwei Vorsprünge sind bezüglich der Längsachse achssymmetrisch zueinander angeordnet. Dadurch kann der jeweilige Vorsprung in zumindest zwei um die Längsachse verdrehten Positionen in die korrespondierende Ausnehmung eingesetzt sein. Beispielsweise weist der Vorsprung eine in Bezug auf die Längsachse quadratische Form auf, so dass der Vorsprung in vier unterschiedlichen Ausrichtungen in die Ausnehmung einsetzbar ist und somit das Aktorgehäuseteil in vier unterschiedlichen Ausrichtungen auf das Strömungskanalgehäuseteil aufsetzbar ist.

Der Vorsprung ist bevorzugt ringförmig ausgebildet und erstreckt sich in eine als Bohrung oder Nut ausgebildete Ausnehmung. Der ringförmige Vorsprung kann eine Mittelachse bzw. Drehachse aufweisen, um die das Strömungskanalgehäuseteil relativ zu dem Aktorgehäuseteil verdreht werden kann. Wenn das Strömungskanalgehäuseteil zylindrisch ausgebildet ist, ist der Vorsprung bevorzugt axial an dem Strömungskanalgehäuseteil ausgebildet und steht von dem Strömungskanalgehäuseteil nach außen hin axial hervor. Alternativ kann der Vorsprung auch an dem Aktorgehäuseteil ausgebildet und in einer an dem Strömungskanatgehäuseteii ausgebildeten Bohrung oder Nut geführt sein.

Vorzugsweise ist die Öffnung, durch die das Betätigungsglied sich erstreckt, von dem Vorsprung über einen axialen Abschnitt der Öffnung radial begrenzt. Dadurch können das Betätigungsglied und der Vorsprung eine gemeinsame Mittel- bzw. Längsachse aufweisen, wobei das Betätigungsglied sich axial durch die Öffnung des Vorsprungs erstreckt. Um diese Längsachse ist das Strömungskanalgehäuseteil gegenüber dem Aktorgehäuseteil verdrehbar. Die Öffnung des Vorsprungs kann die Öffnung des Strömungskanalgehäuseteils sein, durch die das Betätigungsglied sich erstreckt. Das Betätigungsglied erstreckt sich bevorzugt von einem Innenraum des Strömungskanalgehäuseteils durch die Öffnung des Vorsprungs in einen Innenraum des Aktorgehäuseteils.

Der Vorsprung ist in einer Ausführung von einem separaten Zentrier- oder Führungsstift gebildet, der sich in eine als Bohrung und/oder Nut ausgebildete Ausnehmung erstreckt. Beispielsweise ist der Vorsprung ein Führungsstift, der in einer an dem Strömungskanalgehäuseteil ausgebildeten Bohrung eingesteckt ist und sich in eine an dem Aktorgehäuseteil ausgebildete, umlaufende Nut erstreckt. In einer Ausführung sind zwei Vorsprünge vorgesehen, die jeweils als ein Stift ausgebildet sind und vorzugsweise bezüglich der Längsachse achssymmetrisch angeordnet sind.

In einer Ausführung weist das Vorsprung einen elastischen Clip bzw. eine elastische Rastnase auf, der bzw. die in einen Konterclip bzw. eine korrespondierende Aussparung eingreift, um das Strömungskanalgehäuseteil an dem Aktorgehäuseteil auszurichten und/oder festzulegen. Beispielsweise greift die Rastnase in eine an dem Aktorgehäuseteil ausgebildete Aussparung ein und verhindert somit ein Lösen und/oder Verdrehen des Strömungskanalgehäuseteils. Alternativ kann der Clip auch als ein Steg ausgebildet sein, der einen Konterabsatz hintergreift. Dadurch kann das Strömungskanalgehäuseteil an dem Aktorgehäuseteil gegen ein Herausfallen und/oder Verdrehen gesichert werden. Es können auch mehrere korrespondierende Konterclips oder Aussparungen vorgesehen sein, in die die Rastnase wahlweise eingerastet werden kann. Dadurch kann eine relative Ausrichtung und/oder Befestigung des Strömungskanalgehäuseteils an dem Aktorgehäuseteil in relativ einfacher Weise erfolgen.

Vorzugsweise weist das Aktorgehäuseteil eine Aktorgehäuseteil-Grundplatte auf, mit der das Aktorgehäuseteil an dem Strömungskanalgehäuseteil flächig anliegt. Insbesondere kann das Aktorgehäuseteil mit der Aktorgehäuseteil-Grundplatte auf einem Deckel des Strömungskanalgehäuseteils aufliegen. Die Aktorgehäuseteil-Grundplatte liegt bevorzugt in einer Ebene, in der das Strömungskanalgehäuseteil gegenüber dem Aktorgehäuseteil verdrehbar ist. Dadurch kann eine relative Ausrichtung des Strömungskanalgehäuseteils gegenüber dem Aktorgehäuseteil in relativ einfacher Weise erfolgen. Ferner kann ein als Einsteckgehäuse ausgebildetes Strömungskanalgehäuseteil optimal in der Einsteck-Aufnahme gehalten werden. In einer Ausführung umgibt die Aktorgehäuseteil-Grundplatte das Strömungskanalgehäuseteil zusätzlich zumindest teilweise radial. Dadurch kann an einem radialen Seitenbereich des Aktorgehäuseteils bzw. der Aktorgehäuseteil-Grundplatte eine Befestigungseinrichtung zur Befestigung des Regelventils an einem fahrzeugseitigen Strömungskanalgehäuse angeordnet sein, wodurch das Regelventil in relativ einfacher Weise befestigt werden kann.

Zwischen dem Strömungskanalgehäuseteil und dem Aktorgehäuseteil ist vorzugsweise eine Dichtung angeordnet. Die Dichtung kann bei einer Befestigung des Regelventils an dem Strömungskanal elastisch verformt sein. Hierdurch wird einerseits eine vollständige Dichtheit des Übergangs vom Strömungskanalgehäuseteil zum Aktorgehäuseteil nach außen und umgekehrt sichergestellt, und andererseits kann eine verspannend wirkende Kraft durch eine Verschraubung des Regelventils an der Strömungsleitung erhöht werden.

Das Regelventil kann als ein Hubventil ausgebildet sein, wobei der Regelkörper als ein Ventilteller und das Betätigungsglied als eine Ventilstange ausgebildet sind, die entlang der Längsachse translatorisch bewegbar sind.

Alternativ kann das Regelventil als ein Drehventil ausgebildet ist, wobei der Regelkörper als eine Klappe und das Betätigungsglied als eine Welle ausgebildet sind, die um die Längsachse drehbar gelagert sind.

Es wird somit ein Regelventil in Modulbauweise geschaffen, das für verschiedene fahrzeugseitige Anschlussgegebenheiten, wie Strömungskanaldurchmesser, Aufnahmegröße, Anschlussbohrungsmuster oder freier Montageraum, und somit für unterschiedliche Kundenwünsche eine einfache und kostengünstige Herstellung und Montage gewährleistet. Entsprechend kann das Gehäuse des Regelventils aus verschiedenen für die jeweilige Anwendung geeigneten Modulen zusammengesetzt und genutzt werden, ohne dass aufwendige Modifikationen an dem Regelventil notwendig wären.

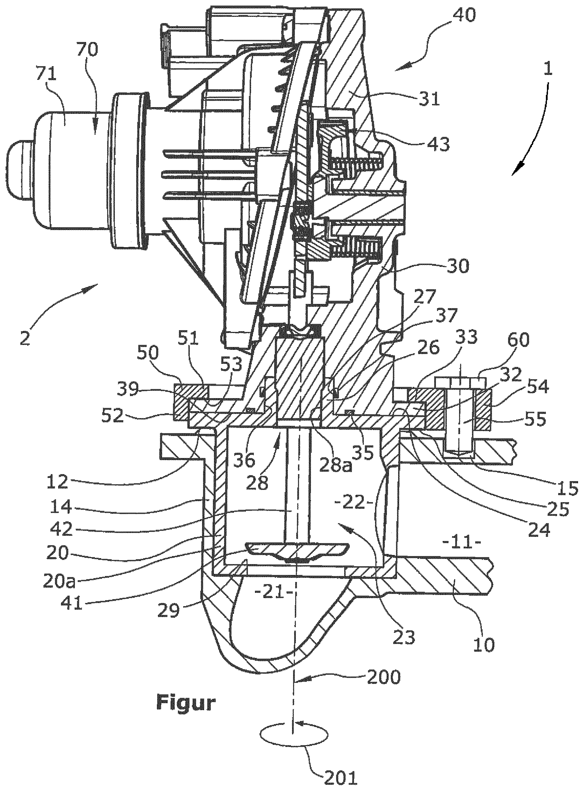

Nachfolgend wird die Erfindung anhand eines Ausführungsbeispiels unter Bezugnahme auf die anliegende Zeichnung näher erläutert. Die einzige Figur zeigt eine Seitenansicht eines erfindungsgemäßen Regelventils an einem Strömungskanalgehäuse in geschnittener Darstellung.

Das in der Figur dargestellte Regelventil 1 weist ein Regelventilgehäuse 2 auf, das zumindest aus einem Strömungskanalgehäuseteil 20 und einem Aktorgehäuseteil 30 besteht. Das Strömungskanalgehäuseteil 20 und das Aktorgehäuseteil 30 können jeweils separat aus einem Leichtmetall im Druckgussverfahren, im Sandgussverfahren oder auch - bei niedrigen Gastemperaturen - aus Kunststoff hegestellt sein. Das Regelventil 1 ist in dem in der Figur gezeigten Beispiel als ein Steckventil ausgeführt, wobei das Strömungskanalgehäuseteil 20 als ein zylindrisches Einsteckgehäuseteil 20a ausgebildet ist, das in eine fahrzeugseitige Aufnahme 14 eines fahrzeugseitigen Strömungskanalgehäuses 10 eingesetzt ist. Das Strömungskanalgehäuseteil 20 weist eine axiale Längsachse 200 auf, um die das Strömungskanalgehäuseteil 20 in eine Richtung 201 oder in Gegenrichtung relativ zu dem Aktorgehäuseteil 30 verdrehbar ist.

Das Strömungskanalgehäuseteil 20 bzw. das Einsteckgehäuseteil 20a bildet einen Abschnitt eines von dem Strömungskanalgehäuse 10 begrenzten Strömungskanals 11. Dazu weist das zylindrische Strömungskanalgehäuseteil 20 eine axiale Strömungseinlassöffnung 21, eine radiale Strömungsauslassöffnung 22 und einen dazwischen angeordneten Strömungskanalabschnitt 23 auf. Das Strömungskanalgehäuseteil 20 weist an einer axialen Unterseite einen mit einem Regelkörper 41 korrespondieren Ventilsitz 29 auf. An einer axialen oberen strömungskanalgehäuseteil-Anlagefläche 24 des Strömungskanalgehäuseteils 20 liegt das Aktorgehäuseteil 30 an dem Strömungskanalgehäuseteil 20 an. Die obere Strömungskanalgehäuseteil-Anlagefläche 24 ist von einer axial angeordneten Öffnung 28 durchbrochen, durch die ein Betätigungsglied 42 sich erstreckt. In diesem Bereich der oberen Strömungskanalgehäuseteil-Anlagefläche 24 ist ein ringförmiger Vorsprung 26 an dem Strömungskanalgehäuseteil 20 angeordnet.

Der Vorsprung 26 ist in diesem Beispiel als ein von dem Strömungskanalgehäuseteil 20 in Richtung des Aktorgehäuseteils 30 hervorstehender Zylinder ausgebildet, der in einer Bohrung bzw. Ausnehmung 36 des Aktorgehäuseteils 30 drehbar gelagert ist. Der Vorsprung 26 weist eine Mittelachse auf, die auf der Längsachse 200 eines Betätigungsglieds 42 und des Strömungskanalgehäuseteils 20 liegt. Der Vorsprung 26 weist eine axial angeordnete Bohrung bzw, Öffnung 28a auf, durch die das Betätigungsglied 42 sich erstreckt. Dadurch ist im vorliegenden Beispiel die Öffnung 28 mit der Öffnung 28a identisch. Im Bereich eines freien Endes des Vorsprungs 26 weist der Vorsprung 26 in diesem Beispiel eine Rastnase 27 auf, die mit einer Aussparung 37 des Aktorgehäuseteils 30 in Eingriff steht. Dadurch ist der Vorsprung 26 und damit das Strömungskanalgehäuseteil 20 - zum Beispiel bei der Montage des Regelventils 1 - gegen ein Herausrutschen aus der Ausnehmung 36 bzw. von dem Aktorgehäuseteils 30 gesichert. Alternativ kann diese Sicherung über einen Überwurfflansch 50 erfolgen, der weiter unten näher beschrieben ist.

Das Aktorgehäuseteil 30 ist außerhalb des fahrzeugseitigen Strömungskanals 11 an dem fahrzeugseitlgen Strömungskanalgehäuse 10 angeordnet. Das Aktorgehäuseteil 30 liegt mit einer Unterseite 39 einer mit dem Aktorgehäuseteil 30 einstückig ausgebildeten Aktorgehäuseteil-Grundplatte 32 auf der oberen Strömungskanalgehäuseteil-Anlagefläche 24 auf. Zwischen dem Aktorgehäuseteil 30, insbesondere der Unterseite 39 der Aktorgehäuseteil-Grundplatte 32, und dem Strömungskanalgehäuseteil 20, insbesondere der Strömungskanalgehäuseteil-Anlagefläche 24, ist eine Dichtung 35 angeordnet. Dadurch kann sichergestellt werden, dass nach Festlegen des Regelventils 1 an dem fahrzeugseitigen Strömungskanalgehäuse 10 eine Bewegung des Strömungskanalgehäuseteils 20 relativ zu dem Aktorgehäuseteil 30 verhindert wird und eine zuverlässige Abdichtung des Strömungskanalabschnitts 23 nach außen stattfindet. Das Aktorgehäuseteil 30 erstreckt sich in einer zu dem Strömungskanalgehäuseteil 20 entgegengesetzten Richtung in Form eines Trägerkörpers 31 zum Befestigen weiterer Regelventilkomponenten.

An dem Aktorgehäuseteil 30, insbesondere an dem Trägerkörper 31 des Aktorgehäuseteils 30, ist vorliegend ein Elektromotorgehäuse 71 zur Aufnahme eines Elektromotors 70 befestigt, der zum Antrieb des Regelventils 1, insbesondere des Regelkörpers 41, dient. Das Aktorgehäuseteil 30 bildet gemeinsam mit dem Elektromotorgehäuse 71 einen oberen Teil des Regelventilgehäuses 2, wobei das Elektromotorgehäuse 71 senkrecht zu der Längsachse 200 von dem Aktorgehäuseteil 30 auskragt. Der Antrieb des Regelventils 1 erfolgt durch Bestromung des Elektromotors 70, der mit einem nachgeschalteten Getriebe 43 einen Aktor 40 bildet. Die entstehende Drehung einer nicht dargestellten Motorwelle wird durch das Getriebe 43, welches ebenfalls im Aktorgehäuseteil 30 angeordnet ist, in eine translatorische Bewegung des Betätigungsglieds 42, insbesondere einer Ventilstange, entlang der Längsachse 200 umgewandelt, wobei an einem Ende des Betätigungsglieds 42 ein Regelkörper 41 angeordnet ist.

Der Regelkörper 41 beherrscht einen von einem Ventilsitz 29 umgebenen Durchlass des Strömungskanalabschnitts 23, der zwischen dem Strömungseinlass 21 und dem Strömungsauslass 42 ausgebildet ist, so dass eine Strömungsverbindung zwischen dem Strömungseinlass 21 und dem Strömungsauslass 42 bei Aufliegen des Regelkörpers 41 auf dem Ventilsitz 29 unterbrochen wird und durch Abheben des Regelkörpers 41 vom Ventilsitz 29 freigegeben wird.

Ein Überwurfflansch 50 ist zur Befestigung des Regelventils 1 beziehungsweise des Regelventilgehäuses 2 an dem fahrzeugseitigen Strömungskanalgehäuse 10 vorgesehen. Der Überwurfflansch 50 weist dazu einen ersten axialen Abschnitt 51 auf, mit dem der Überwurfflansch 50 mit einer Überwurfflansch-Unterseite 53 an der Oberseitenfläche 33 des Aktorgehäuseteils 30 anliegt, und an dem in einem radialen Außenbereich des Überwurfflansches 50 ein zweiter axialer Abschnitt 52 in Richtung des Strömungskanalgehäuseteils 20 hervorsteht. Der Innenumfang des zweiten axialen Abschnitts 52 entspricht im Wesentlichen dem Außenumfang der Aktorgehäuseteil-Grundplatte 32, an dem der Überwurfflansch 50 anliegt. Es kann beispielsweise eine Spielpassung zwischen diesen Bauteilen 32, 52 vorgesehen sein. An dem Überwurfflansch 50 sind Anschraubdome 54 ausgebildet, die Durchgangslöcher gemäß einem Schraubenlochmuster aufweisen. Entsprechend kann die Aktorgehäuseteil-Grundplatte 32 und damit das Aktorgehäuseteil 30 durch Schrauben 55 an dem fahrzeugseitigen Strömungskanalgehäuse 10, insbesondere an einem Gegenflansch 15, befestigt werden.

Bei der Montage des Regelventils 1 erfolgt vorliegend zunächst ein Einsetzen des Strömungskanalgehäuseteils 20 in die Aufnahme 14 derart, dass der Strömungseinlass 21 und der Strömungsauslass 22 jeweils mit den Öffnungen der Motor-Strömungsleitung 11 zusammen passen. Anschließend wird das mit der Aktorgehäuseteil-Grundplatte 32 auf dem Strömungskanalgehäuseteil 20 aufgesetzte Aktorgehäuseteil 30 entsprechend einem im Fahrzeug vorhandenen Montage- bzw. Anbauraum ausgerichtet, das heißt es erfolgt ein Verdrehen 201 des Strömungskanalgehäuseteils 20 gegenüber dem Aktorgehäuseteil 30 oder umgekehrt um die Längsachse 200. Sodann kann der Überwurfflansch 50 an dem fahrzeugseitigen Bohrungsmuster des Gegenflansches 15 ausgerichtet werden, indem dieser ebenfalls gegenüber dem Strömungskanalgehäuseteil 20 und/oder Aktorgehäuseteil 30 verdreht wird. Nach dem Ausrichten kann der Überwurfflansch 50 mittels Schrauben 55 an dem fahrzeugseitigen Strömungskanalgehäuse 10 festgelegt werden. Um sicher zu stellen, dass diese Befestigung eine Bewegung des Regelventilgehäuses 2 relativ zu dem Strömungskanal 11 vollständig verhindert und eine zuverlässige Abdichtung des Strömungskanals nach außen stattfindet, ist zwischen dem Strömungskanalgehäuseteil 20, insbesondere an einer unteren Strömungskanalgehäuseteil-Anlagefläche 25, und dem Strömungskanalgehäuse 11 eine elastische Dichtung 12 angeordnet, die beim Verschrauben der Schrauben 55 verspannt wird. Alternativ kann der Regelventil 1 vollständig vormontiert sein.

### Bezugszeichen:

- 1: Regelventil
- 2: Regelventilgehäuse

- 10: fahrzeugseitige Motor-Strömungsleltungsgehäuse
- 11: Motor-Strömungsleitung
- 12: Dichtung
- 14: Aufnahme
- 15: Konterflansch, Gegenflansch

- 20: Strömungskanalgehäuseteil
- 20a: Einsteckgehäuseteil
- 21: Strömungseinlassöffnung
- 22: Strömungsauslassöffnung
- 23: Strömungskanalabschnitt
- 24: obere Strömungskanalgehäuseteil-Anlagefläche
- 25: untere Strömungskanalgehäuseteil-Anlagefläche
- 26: Vorsprung
- 27: Rastnase, Clip
- 28: Öffnung, Bohrung
- 28a: Öffnung, Bohrung
- 29: Ventilsitz

- 30: Aktorgehäuseteil
- 31: Trägerkörper
- 32: Aktorgehäuseteil-Grundplatte
- 33: Absatz, Steg
- 34: Absatz, Steg
- 35: Dichtung
- 36: Ausnehmung, Bohrung, Nut
- 37: Aussparung, Steg
- 39: Unterseite der Aktorgehäuseteil-Gruridplatte

- 40: Aktor
- 41: Regelkörper
- 42: Betätigungsglied
- 43: Getriebe

- 50: Überwurfflansch
- 51: erster axialer Abschnitt
- 52: zweiter axialer Abschnitt
- 53: Überwurfflansch-Unterseite
- 54: Anschraubdom
- 55: Schrauben

- 70: Elektromotor
- 71: Elektromotorgehäuse

- 200: Längsachse, Drehachse
- 201: Drehrichtung, Verdrehbarkeit

## Patentansprüche

1. Regelventil (1) zum Anbau an ein Strömungskanalgehäuse (10) eines Kraftfahrzeug-Verbrennungsmotors mit
einem Strömungskanalgehäuseteil (20, 20a), das zumindest eine Strömungseinlassöffnung (21) und eine Strömungsauslassöffnung (22) aufweist,
einem Regelkörper (41), der in dem Strömungskanalgehäuseteil (20, 20a) angeordnet ist und mit dem ein Durchlass zwischen der Strömungseinlassöffnung (21) und der Strömungsauslassöffnung (22) regelbar ist,
einem Betätigungsglied (42) mit einer Längsachse (200), an dem der Regelkörper (41) befestigt ist und das sich in Längserstreckung durch eine Öffnung (28, 28a) des Strömungskanalgehäuseteils (20, 20a) erstreckt,
einem Aktor (40), der durch ein Getriebe (43) mit einem Elektromotor (70) gebildet ist und über den das Betätigungsglied (42) in Bewegung versetzbar ist, und
einem Aktorgehäusetell (30),
wobei das Strömungskanalgehäuseteil (20, 20a) und das Aktorgehäuseteil (30) jeweils separat ausgebildet sind, und
das Aktorgehäuseteil (30) relativ zu dem Strömungskanalgehäuseteil (20, 20a) in zumindest zwei um die Längsachse (200) verdrehten Positionen auf das Strömungskanalgehäuseteil (20, 20a) aufsetzbar ist,
**dadurch gekennzeichnet, dass** zumindest ein Vorsprung (26) vorgesehen ist, der sich in eine an dem Strömungskanalgehäuseteil (20, 20a) und/oder an dem Aktorgehäuseteil (30) ausgebildete, korrespondierende Ausnehmung (36) erstreckt,
und wobei das Strömungskanalgehäuseteil (20) als ein Einsteckgehäuse (20a) ausgebildet ist, das in eine Aufnahme (14) des Strömungskanalgehäuses (10) einsteckbar ist.

2. Regelventil (1) nach Anspruch 1, **dadurch gekennzeichnet, dass** ein Überwurfflansch (50) vorgesehen ist, der das Aktorgehäuseteil (30) zumindest teilweise radial umgibt, und der relativ zu dem Aktorgehäuseteil (30) in zumindest zwei um die Längsachse (200) verdrehten Positionen auf das Aktorgehäuseteil (30) aufsetzbar ist, und der ein Schraubenlochmuster (55) zum Befestigen des Überwurfflansches (50) an dem Strömungskanalgehäuse (10) aufweist.

3. Regelventil (1) nach Anspruch 2, **dadurch gekennzeichnet, dass** der Überwurfflansch (50) sowohl mit einer axialen Anlagefläche (53) als auch mit einer radialen Anlagefläche an dem Aktorgehäuseteil (30) anliegt.

4. Regelventil (1) nach einem der vorhergehenden Ansprüche, **dadurch gekennzeichnet, dass** der Vorsprung (26) konzentrisch zu der Längsachse (200) angeordnet ist oder die Vorsprünge (26) bezüglich der Längsachse (200) achssymmetrisch zueinander angeordnet sind.

5. Regelventil (1) nach einem der vorhergehenden Ansprüche, **dadurch gekennzeichnet, dass** der Vorsprung (26) ringförmig ausgebildet ist und sich in eine als Bohrung oder Nut ausgebildete Ausnehmung (36) erstreckt.

6. Regelventil (1) nach einem der vorhergehenden Ansprüche, **dadurch gekennzeichnet, dass** die Öffnung (28), durch die das Betätigungsglied (42) sich erstreckt, von dem Vorsprung (26) über einen axialen Abschnitt (28a) der Öffnung (28) radial begrenzt ist.

7. Regelventil (1) nach einem der vorhergehenden Ansprüche, **dadurch gekennzeichnet, dass** der Vorsprung (26) ein Führungsstift oder Zentrierstift ist, der sich in eine als Bohrung und/oder Nut ausgebildete Ausnehmung (36) erstreckt.

8. Regelventil (1) nach einem der vorhergehenden Ansprüche, **dadurch gekennzeichnet, dass** der Vorsprung (26) eine elastische Rastnase (27) aufweist, die in eine korrespondierende Aussparung (37) eingreift.

9. Regelventil (1) nach einem der voranstehenden Ansprüche, **dadurch gekennzeichnet, dass** das Aktorgehäuseteil (30) eine Aktorgehäuseteil-Grundplatte (32) aufweist, mit der das Aktorgehäuseteil (30) an dem Strömungskanalgehäuseteil (20, 20a) flächig anliegt.

10. Regelventil (1) nach einem der voranstehenden Ansprüche, **dadurch gekennzeichnet, dass** zwischen dem Strömungskanalgehäuseteil (20, 20a) und dem Aktorgehäuseteil (30) eine Dichtung (35) angeordnet ist.

11. Regelventil (1) nach einem der voranstehenden Ansprüche, **dadurch gekennzeichnet, dass** das Regelventil (1) ein Hubventil ist, wobei der Regelkörper (41) als ein Ventilteller und das Betätigungsglied (42) als eine Ventilstange ausgebildet sind, die entlang der Längsachse (200) translatorisch bewegbar sind.

12. Regelventil (1) nach einem der Ansprüche 1 bis 10, **dadurch gekennzeichnet, dass** das Regelventil (1) ein Drehventil ist, wobei der Regelkörper (41) als eine Klappe und das Betätigungsglied (42) als eine Welle ausgebildet sind, die um die Längsachse (200) drehbar gelagert sind.

## Claims

1. Control valve (1) for mounting on a flow channel housing (10) of an internal combustion engine of a motor vehicle, comprising
a flow channel housing part (20, 20a) having at least a flow inlet opening (21) and a flow outlet opening (22),
a control body (41) which is arranged in the flow channel housing part (20, 20a) and with which a passage between the flow inlet opening (21) and the flow outlet opening (22) can be controlled,
an actuating member (42) having a longitudinal axis (200), to which the control body (41) is fastened and which extends in the longitudinal direction through an opening (28, 28a) of the flow channel housing (20, 20a),
an actuator (40) formed by a transmission (43) with an electric motor (70) and via which the actuating member (42) can be moved, and
an actuator housing part (30),
wherein
the flow channel housing (20, 20a) and the actuator housing part (30) are each formed separately, and
the actuator housing part (30) is adapted to be set on the flow channel housing (20, 20a) in at least two positions turned about the longitudinal axis (200) with respect to the flow channel housing part (20, 20a), **characterized in that**
at least one projection (26) is provided which extends into a corresponding recess (36) formed in the flow channel housing (20, 20a) and/or the actuator housing part (30),
and wherein the flow channel housing part (20) is formed as a plug-in housing (20a) adapted to be plugged into a receptacle (14) of the flow channel housing (10).

2. Control valve (1) of claim 1, **characterized in that** a collar flange (50) is provided which radially surrounds the actuator housing part (30) at least in part, and which is adapted to be set on the actuator housing part (30) in at least two positions turned about the longitudinal axis (200) with respect to the actuator housing part (30), and which comprises a screw hole pattern (55) for fastening the collar flange (50) to the flow channel housing (10).

3. Control valve (1) of claim 2, **characterized in that** the collar flange (50) is in contact with the actuator housing part (30) both by an axial contact surface (53) and a radial contact surface.

4. Control valve (1) of one of the preceding claims, **characterized in that** the projection (26) is arranged concentrically with respect to the longitudinal axis (200) or the projections (26) are arranged to be axially symmetric to each other with respect to the longitudinal axis (200).

5. Control valve (1) of one of the preceding claims, **characterized in that** the projection (26) is annular in shape and extends into a recess (36) formed as a bore or a groove.

6. Control valve (1) of one of the preceding claims, **characterized in that** the opening (28) through which the actuating member (42) extends is radially limited by the projection (26) over an axial section (28a) of the opening (28).

7. Control valve (1) of one of the preceding claims, **characterized in that** the projection (26) is a guide pin or a centering pin extending into a recess (36) formed as a bore and/or a groove.

8. Control valve (1) of one of the preceding claims, **characterized in that** the projection (26) has an elastic locking tab (27) engaging into a corresponding recess (37).

9. Control valve (1) of one of the preceding claims, **characterized in that** the actuator housing part (30) comprises an actuator housing part base plate (32) by which the actuator housing part (30) is in surface contact with the flow channel housing part (20, 20a).

10. Control valve (1) of one of the preceding claims, **characterized in that** a seal (35) is arranged between the flow channel housing part (20, 20a) and the actuator housing part (30).

11. Control valve (1) of one of the preceding claims, **characterized in that** the control valve (1) is a lift valve, wherein the control body (41) is formed as a valve plate and the actuating member (42) is formed as a valve rod, which are configured for translator movement along the longitudinal axis (200).

12. Control valve (1) of one of claims 1 to 10, **characterized in that** the control valve (1) is a rotary valve, wherein the control body (41) is formed as a flap and the actuating member (42) is formed as a shaft, which are supported for rotation about the longitudinal axis (200).

## Revendications

1. Soupape de commande (1) destinée à être monté sur un boitier à canal d'écoulement (10) d'un moteur à combustion interne d'un véhicule moteur, avec
une partie de boitier à canal d'écoulement (20, 20a) comportant au moins une ouverture d'admission d'écoulement (21) et une ouverture de sortie d'écoulement (22),
un corps de commande (41) qui est disposé dans la partie de boitier à canal d'écoulement (20, 20a) et qui permet de commander une passage entre l'ouverture d'admission d'écoulement (21) et l'ouverture de sortie d'écoulement (22),
un élément actionneur (42) avec un axe longitudinal (200), le corps de commande (41) étant monté sur cet élément, et ledit élément s'étendant à travers une ouverture (28, 28a) de la partie de boitier à canal d'écoulement (20, 20a),
un actionneur (40) formé par un engrenage (43) avec un électromoteur (70), et par lequel l'élément actionneur (42) peut être mis en mouvement, et
une partie de boitier d'actionneur (30),
la partie de boitier à canal d'écoulement (20, 20a) et la partie de boitier d'actionneur (30) étant chacune réalisée séparément, et
la partie de boitier d'actionneur (30) pouvant être placée, par rapport à la partie de boitier à canal d'écoulement (20, 20a), sur la partie de boitier à canal d'écoulement (20, 20a) en au moins deux positions tournées autour de l'axe longitudinal (200),
**caractérisée en ce que**
au moins une saillie (26) est prévue qui s'étend dans un évidement correspondant formé dans la partie de boitier à canal d'écoulement (20, 20a) et/ou la partie de boitier d'actionneur (30),
et la partie de boitier à canal d'écoulement (20) étant conçue comme boitier enfichable (20a) pouvant être enfiché dans un logement (14) du boitier à canal d'écoulement (10).

2. Soupape de commande (1) selon la revendication 1, **caractérisée en ce qu'**une bride tournante (50) est prévue, qui entoure la partie de boitier d'actionneur (30) au moins partiellement dans la direction radiale, et qui peut être placée, par rapport à la partie de boitier d'actionneur (30), sur la partie de boitier d'actionneur (30) en au moins deux positions tournées autour de l'axe longitudinal (200), et qui comprend une matrice de trous de vis (55) pour fixer la bride tournante (50) sur le boitier à canal d'écoulement (10).

3. Soupape de commande (1) selon la revendication 2, **caractérisée en ce que** la bride tournante (50) s'appuie sur la partie de boitier d'actionneur (30) aussi bien par une face de contact (53) axiale que par une face de contact radiale.

4. Soupape de commande (1) selon l'une quelconque des revendications précédentes, **caractérisée en ce que** la sortie (26) est disposée de manière concentrique par rapport à l'axe longitudinal (200), ou les saillies (26) sont disposées axialement symétrique l'une à l'autre par rapport à l'axe longitudinal (200).

5. Soupape de commande (1) selon l'une quelconque des revendications précédentes, **caractérisée en ce que** la saillie (26) est annulaire et s'étend dans un évidement (35) en forme d'un alésage ou d'une rainure.

6. Soupape de commande (1) selon l'une quelconque des revendications précédentes, **caractérisée en ce que** l'ouverture (28), à travers laquelle s'étend ledit élément actionneur (42), est délimitée par la saillie (26) sur une section axiale (28a) de ladite ouverture (28).

7. Soupape de commande (1) selon l'une quelconque des revendications précédentes, **caractérisée en ce que** la saillie (26) est une goupille de guidage ou une goupille de centrage qui s'étend dans un évidement (36) en forme d'un alésage et/ou d'une rainure.

8. Soupape de commande (1) selon l'une quelconque des revendications précédentes, **caractérisée en ce que** la saillie (26) comporte un nez de verrouillage (27) élastique s'engageant dans un évidement (37) correspondant.

9. Soupape de commande (1) selon l'une quelconque des revendications précédentes, **caractérisée en ce que** la partie de boitier d'actionneur (30) comporte une plaque de base (32) de la partie de boitier d'actionneur par laquelle la partie de boitier d'actionneur (30) s'appuie sur la partie de boitier à canal d'écoulement (20, 20a).

10. Soupape de commande (1) selon l'une quelconque des revendications précédentes, **caractérisée en ce qu'**un joint (35) est disposé entre la partie de boitier à canal d'écoulement (20, 20a) et la partie de boitier d'actionneur (30).

11. Soupape de commande (1) selon l'une quelconque des revendications précédentes, **caractérisée en ce que** la soupape de commande (1) est une soupape de levée, ledit corps de commande (41) étant conçu comme tête de soupape et ledit élément actionneur (42) étant conçu comme tige de soupape, les deux étant déplaçable en translation le long de l'axe longitudinal (200).

12. Soupape de commande (1) selon l'une quelconque des revendications 1 à 10, **caractérisée en ce que** la soupape de commande (1) est une soupape rotative, le corps de commande (41) étant conçu comme clapet et ledit élément actionneur (42) étant conçu comme arbre, les deux étant supportés pour tourner autour de l'axe longitudinal (200).
